# EUROPEAN PATENT SPECIFICATION

(11) **EP 0 512 781 B1**
(45) Date of publication and mention of the grant of the patent: **12.04.1995**
(21) Application number: 92304008.3
(22) Date of filing: 01.05.1992
(51) Int. Cl.: B01D 53/04, C01B 21/04

(54) **Improvements in pressure swing adsorption plants**
Verbesserungen in Druckwechsel-Adsorptionsvorrichtungen
Améliorations dans les dispositifs d'adsorption à pression alternée

(30) Priority: 09.05.1991 GB 9110038
(43) Date of publication of application: 11.11.1992
(73) Proprietor: The BOC Group plc, Windlesham Surrey GU20 6HJ (GB)
(72) Inventor: Armond, John W., Guildford, Surrey GU1 2XR (GB)
(74) Representative: Gough, Peter

(56) References cited:
- EP-A- 0 041 329
- EP-A- 0 262 889
- US-A- 4 026 680

## Description

The present invention relates to the separation of at least one constituent of a feed gas mixture by pressure suing adsorption (PSA) techniques.

United States Patent US-A-4026680 addresses the problem of cold zones which are formed in the pressure vessels of PSA plants, particularly large scale PSA plants for the production of oxygen from feed air where the adsorbent material used is a zeolite molecular sieve.

United States Patent US-A-4026680 discloses that temperature drops in the order of 56°C (100°F) below feed air temperature have been observed at the inlet end of pressure vessels forming part of a PSA plant for the production of oxygen from feed air. Since the molecular sieve material is usually selected to operate best, as regards oxygen recovery efficiency, at ambient conditions, the effect of a cold zone is to reduce the performance of the molecular sieve material.

In order to meet this problem United States Patent US-A-4026680 teaches the transferance of heat within the pressure vessel from the ambient temperature zones to the cold zone by metal solid conduction. The metal solid conduction can take the form of a plurality of metal plates positioned parallel and equidistant from each other and extending through the adsorbent bed such that heat from ambient temperature areas of the pressure vessel is conducted via the metal plates to a cold zone adjacent the inlet to the pressure vessel. In other words, the United States Patent US-A-4026680 concentrates on warming up the bed of adsorbent material at a location adjacent the inlet of the pressure vessel.

It is an aim of the present invention to provide means which inhibit the effect of a cold zone in a pressure vessel of a PSA plant by taking advantage of the relatively cold inlet by selecting molecular sieve material having optimum efficiency for gross nitrogen removal at a relatively low temperature and which minimizes the radial temperature gradient adjacent the outlet of the pressure vessel and use there a sieve chosen for optimum efficiency at ambient plant operating temperatures.

According to the present invention an apparatus for the separation of at least one constituent from a feed gas mixture by pressure swing adsorption comprises a pressure vessel having an inlet for the feed gas mixture and an outlet for product gas, a first bed of a molecular sieve adsorbent selected for optimum operational efficiency at ambient temperature and located adjacent the outlet and a second bed of a molecular sieve adsorbent selected for optimum operational efficiency at a temperature below ambient.

In a preferred embodiment the second bed of molecular sieve adsorbent is selected for optimum operational efficiencies at a temperature between -35 to -45°C.

Preferably, a plurality of metal plates are positioned within the first bed each in good thermal contact with an interior surface of the pressure vessel.

Additionally or alternatively, a heater may be arranged within the first bed.

Embodiments of the invention will now be described by way of example, reference being made to the Figures of the accompanying diagrammatic drawings in which:-
Figure 1 is a schematic view of a pressure vessel forming part of a pressure swing adsorption plant for the production of oxygen enriched gas from air; and
Figure 2 is a similar schematic view of a further pressure vessel forming part of a pressure swing adsorption plant for the production of oxygen enriched gas from air.

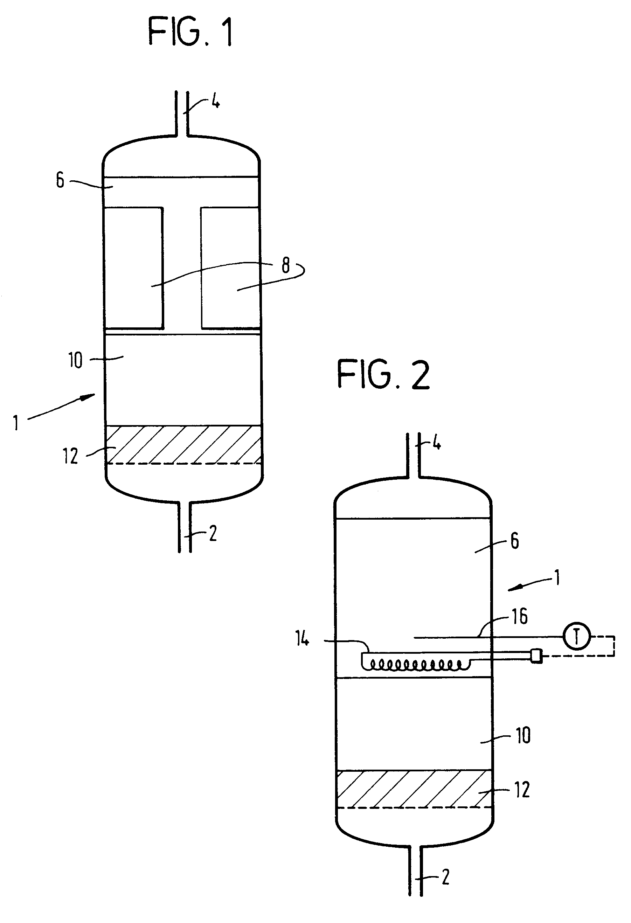

As shown in Figure 1, a pressure vessel 1 forming part of a pressure swing adsorption plant for the production of an oxygen enriched gas from a feed air stream has an inlet 2 for the feed air stream and an outlet 4 for oxygen enriched gas (product gas).

Adjacent the outlet 4 there is located a first bed 6 of a molecular sieve adsorbent selected for optimum operational efficiency at approximately ambient temperature.

Positioned within the bed 6 are a plurality of metal plates 8 each in good thermal contact with the interior surface of the pressure vessel 1. As shown, the plates 8 are arranged in a plane parallel with the longitudinal axis of the bed 6.

Adjacent the inlet 2 there is located a second bed 10 of a molecular sieve adsorbent selected for optimum operating efficiency at a temperature below ambient temperature. The molecular sieve forming the second bed 10 will have an optimum operational efficiency between -35 to -45°C and preferably approximately -40°^{C}.

Between the bed 10 and the inlet 2 there is located an alumina layer 12.

In use, during the adsorption mode of the pressure vessel 1, feed air enters the pressure vessel 1 at inlet 2. The alumina layer 12 removes water vapour and possibly some carbon dioxide thereby allowing the remaining air to pass through the bed 10 where nitrogen is adsorbed from the air.

Finally, the oxygen enriched gas passing from the bed 10 then enters the bed 6 where most of the last few percent of nitrogen is removed. The product gas then leaves the pressure vessel 1 via the outlet 4.

It will be apparent that adjacent the inlet 2 where the cold zone is found the bed 10 will most efficiently remove the nitrogen from the air feed mixture. At the upper (as shown) end of the pressure vessel adjacent the outlet 4 where the temperature is likely to be around ambient, the bed 6 will more efficiently remove substantially all the remaining nitrogen.

The effect of the plates 8 is to minimise the radial temperature gradient at the pressure vessel ambient temperature to minimize the nitrogen adsorption front length in bed 6.

Referring now to Figure 2 where like reference numerals denote like structure; as before the pressure vessel 1 includes an inlet 2 for the feed air stream and an outlet 4 for product gas. Adjacent the outlet 4 there is located first bed 6 of a molecular sieve adsorbent selected for optimum operating efficiency at approximately ambient temperature and adjacent the inlet 2 there is located a second bed 10 of a molecular sieve adsorbent selected for optimum operative efficiency at a temperature below ambient temperature. Between the bed 10 and the inlet 2 is an alumina layer 12.

In this embodiment the plurality of plates 8 are replaced by a heater 14 arranged within the bed 6 which is electrically connected to and controlled by a temperature sensor 16 also located within the first bed 6.

The operation of the pressure vessel 1 in the adsorbent mode is as previously described but the heater electrically linked to the temperature sensor permits control of the temperature within the bed 6. The use of the heater and the temperature sensor also helps to reduce any change of performance during the starting up period of the pressure vessel 1.

It will be evident that the heater and the temperature sensor could be combined with the plates 8 in controlling the radial temperature gradient within the bed 6.

In the above described embodiments advantage is taken of the cold spots adjacent the inlet 2 of the pressure vessel 1 by selecting a molecular sieve material which has an optimum efficiency at low temperatures in the order of -40°C for the gross nitrogen removal adjacent the inlet 2 and concentrates on minimizing radial temperature gradient at the bed 6 adjacent the outlet 4 using there a molecular sieve material chosen for maximum efficiency of operation at about plant ambient temperature.

## Claims

1. An apparatus for the separation of at least one constituent from a feed gas mixture by pressure swing adsorption comprising a pressure vessel (1) having an inlet (2) for the feed gas mixture and an outlet (4) for product gas characterised by a first bed (6) of a molecular sieve adsorbent selected for optimum operational efficiency at ambient temperature and located adjacent the outlet (4) and a second bed (10) of a molecular sieve adsorbent selected for optimum operational efficiency at a temperature below ambient and located adjacent the inlet (2).

2. An apparatus as claimed in Claim 1, characterised in that the second bed (10) is selected for optimum operational efficiency at a temperature between -35 to -45°C.

3. An apparatus as claimed in Claim 1 or 2, characterised in that a plurality of metal plates (8) are positioned within the first bed (6) each in good thermal contact with an interior surface of the pressure vessel (1).

4. An apparatus of claimed in Claim 3, characterised in that each metal plate (8) is arranged in a plane parallel to the axis of the first bed (6).

5. An apparatus as claimed in any one of Claims 1 to 4, characterised in that a heater (14) is arranged within the first bed (6).

6. An apparatus as claimed in Claim 5, characterised in that the heater (14) is electrically connected to and controlled by a temperature sensor (16) located within the first bed (6).

## Patentansprüche

1. Anlage zur Abtrennung von mindestens einem Bestandteil aus einem Speisegasgemisch durch Druckschwingungsadsorption, umfassend ein Druckgefäß (1) mit einem Einlaß (2) für das Speisegasgemisch und einen Auslaß (4) für Produktgas, gekennzeichnet durch ein erstes Bett (6) eines für optimale Wirksamkeit beim Betrieb bei Umgebungstemperatur ausgewählten und neben dem Auslaß (4) angeordneten Molekularsieb-Adsorbiermittels, und ein zweites Bett (10) eines für optimale Wirksamkeit beim Betrieb unterhalb der Umgebungstemperatur ausgewählten und neben dem Einlaß (2) angeordneten Molekularsieb-Adsorbiermittels.

2. Anlage nach Anspruch 1, dadurch gekennzeichnet, daß das zweite Bett (10) für optimale Wirksamkeit beim Betrieb bei einer Temperatur zwischen -35 bis -45°C ausgewählt wurde.

3. Anlage nach Anspruch 1 oder 2, dadurch gekennzeichnet, daß eine Vielzahl von Metallplatten (8) innerhalb des ersten Bettes (6) jeweils in gutem thermischen Kontakt mit einer inneren Oberfläche des Druckgefäßes (1) angeordnet sind.

4. Anlage nach Anspruch 3, dadurch gekennzeichnet, daß jede Metallplatte (8) in einer zur Achse des ersten Bettes (6) parallelen Ebene angeordnet ist.

5. Anlage nach einem der Ansprüche 1 bis 4, dadurch gekennzeichnet, daß eine Heizvorrichtung (14) innerhalb des ersten Bettes (6) angeordnet ist.

6. Anlage nach Anspruch 5, dadurch gekennzeichnet, daß die Heizvorrichtung (14) elektrisch mit einem in dem ersten Bett (6) angeordneten Temperaturfühler (16) verbunden ist und von diesem gesteuert wird.

## Revendications

1. Appareil pour la séparation d'au moins un constituant d'un mélange gazeux d'alimentation, par adsorption avec variation cyclique de la pression (adsorption à pression alternée), cet appareil comprenant un récipient (1) pouvant fonctionner sous pression et comportant une entrée (2) pour le mélange gazeux d'alimentation et une sortie (4) pour le gaz produit, appareil caractérisé par un premier lit (6) d'un tamis moléculaire adsorbant choisi pour présenter son meilleur rendement de fonctionnement à la température ambiante et qui est placé près de la sortie (4), et par un second lit (10) d'un tamis moléculaire adsorbant choisi pour présenter son meilleur rendement de fonctionnement à une température inférieure à la température ambiante et qui est situé près de l'entrée (2).

2. Appareil selon la revendication 1, caractérisé en ce que le second lit (10) est choisi pour présenter son meilleur rendement de fonctionnement à une température comprise entre -35 et -45 °C.

3. Appareil selon la revendication 1 ou 2, caractérisé en ce que plusieurs plaques métalliques (8) sont placées au sein du premier lit (6), chacune étant en bon contact thermique avec une surface intérieure du récipient (1) pouvant fonctionner sous pression.

4. Appareil selon la revendication 3, caractérisé en ce que chaque plaque métallique (8) est placée dans un plan paralléle à l'axe du premier lit (6).

5. Appareil selon l'une quelconque des revendications 1 à 4, caractérisé en ce qu'un dispositif de chauffage (14) est placé au sein du premier lit (6).

6. Appareil selon la revendication 5, caractérisé en ce que le dispositif de chauffage (14) est électriquement connecté à, et commandé par, un détecteur (16) de température situé au sein du premier lit (6).
